# EUROPEAN PATENT APPLICATION

(11) **EP 4 769 681 A1**
(43) Date of publication of application: **01.07.2026**
(21) Application number: 25222429.0
(22) Date of filing: 11.12.2025
(51) Int. Cl.: H01M 50/103, H01M 50/107, H01M 50/367

(54) **SECONDARY BATTERY WITH IMPROVED DEGASSING PERFORMANCE AND METHOD OF MANUFACTURING THE SECONDARY BATTERY**

(30) Priority: 24.12.2024 KR 20240196341
(71) Applicant: SAMSUNG SDI CO., LTD., Yongin-si, Gyeonggi-do 17084 (KR)
(72) Inventor: Byun, Sangwon, 17084 Yongin-si, Gyeonggi-do (KR)
(74) Representative: Meissner Bolte Partnerschaft mbB

(57) **Abstract**

A secondary battery having a degassing space formed inside a battery can, the battery can accommodating an electrode assembly. Using one or more gas guide parts formed inside the battery can, the secondary battery prevents the expansion of an accident by lowering pressure and discharging of gas inside the battery can, even when the electrode assembly expands due to an event, such as a fire or the like. The degassing space that accommodates the electrode assembly opens outward, the electrode assembly can be accommodated in the battery can, and a cap assembly can be mounted on the battery can while in contact with the electrode assembly. The degassing space also has a gas vent part, and the one or more gas guide parts guide gas generated in the battery can toward the gas vent part, the one or more gas guides located on an inner surface of the battery can.

## Description

### BACKGROUND

### 1. Field

The present disclosure relates to a secondary battery and a method of manufacturing a secondary battery, and more specifically, to a secondary battery in which a degassing path is formed inside a battery can, and a method of manufacturing a secondary battery.

### 2. Description of the Related Art

Secondary batteries are batteries that can be charged and discharged, unlike primary batteries that cannot be recharged. In general, a secondary battery includes an electrode assembly formed of electrode plates of positive and negative electrodes, a can for accommodating the electrode assembly, an electrode terminal connected to the electrode assembly, a vent for degassing gas generated inside the can, etc. Recently, secondary batteries for motor driving and power storage in hybrid vehicles, electric vehicles, and the like have become larger in capacity.

In large-capacity secondary batteries, there is a great demand for safety because there is a risk of overheating, thermal runaway, explosion, etc., of the battery due to various causes. When an event, such as a fire, etc., occurs in the secondary battery, the electrode assembly contained inside the can expands so that the electrode assembly presses an inner wall of the can, blocking a degassing passage secured between the can and the electrode assembly.

When the degassing passage is blocked in this way, gas cannot be discharged to the outside, and thus thermal runaway can accelerate due to an increase in internal pressure and lead to an explosion. In conventional secondary batteries, because the degassing passage is easily blocked due to a narrow space between the electrode assembly and the can, there is a need for a technology of allowing gas to be discharged by maintaining the degassing passage even when the electrode assembly expands.

The above information disclosed in this Background section is for enhancement of understanding of the background of the present disclosure, and therefore, it may contain information that does not constitute a related (or prior) art.

### SUMMARY OF THE DISCLOSURE

The present disclosure is directed to providing a secondary battery capable of easily discharging gas and lowering pressure inside a can even when an electrode assembly expands due to an event, such as a fire or the like, so that accidents can be prevented, and a method of manufacturing a secondary battery

According to the invention, there is provided a secondary battery including a battery can that provides a space configured to accommodate an electrode assembly, the electrode assembly accommodated in the battery can, and a cap assembly mounted on the battery can and in contact with the electrode assembly, the cap assembly having a gas vent part, wherein a gas guide part is located on an inner surface of the battery can and configured to guide gas generated in the battery toward the gas vent part.

According to the invention, a method of manufacturing a secondary battery includes: forming a battery can comprising: a space that accommodates an electrode assembly and an inner surface having at least one degassing groove installing an electrode assembly in the battery can, and mounting a cap assembly on the battery can.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a cross-sectional view of a cylindrical secondary battery according to one embodiment of the present disclosure;
FIG. 2 is a perspective view of a prismatic secondary battery according to one embodiment of the present disclosure;
FIG. 3 is a cross-sectional view along line A-A in FIG. 2;
FIG. 4 is a perspective view of a secondary battery pack to which the secondary battery according to one embodiment of the present disclosure is applied;
FIG. 5 is a view illustrating a vehicle on which the secondary battery pack is mounted;
FIGS. 6, 7, 8, 9, 10, and 11 are cross-sectional views illustrating various degassing grooves applied to the cylindrical secondary battery according to one embodiment of the present disclosure;
FIGS. 12, 13, 14, 15, 16, and 17 are cross-sectional views for describing various degassing grooves applied to the prismatic secondary battery according to one embodiment of the present disclosure;
FIG. 18 is a partial cross-sectional view for describing a method of bonding a cap assembly to a battery can in the secondary battery according to one embodiment of the present disclosure;
FIG. 19 is a partial cross-sectional view for describing a method of bonding a bottom portion to a body portion of a battery can in the secondary battery according to one embodiment of the present disclosure;
FIG. 20 is a flowchart illustrating a method of manufacturing a secondary battery according to one embodiment of the present disclosure;
FIGS. 21, 22, and 23 are schematic views illustrating a method of manufacturing a secondary battery;
FIG. 24 is a flowchart illustrating another method of manufacturing a secondary battery according to one embodiment of the present disclosure; and
FIGS. 25, 26, 27, and 28 are schematic views associated with the method of manufacturing the secondary battery.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein includes all sub-ranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification includes all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

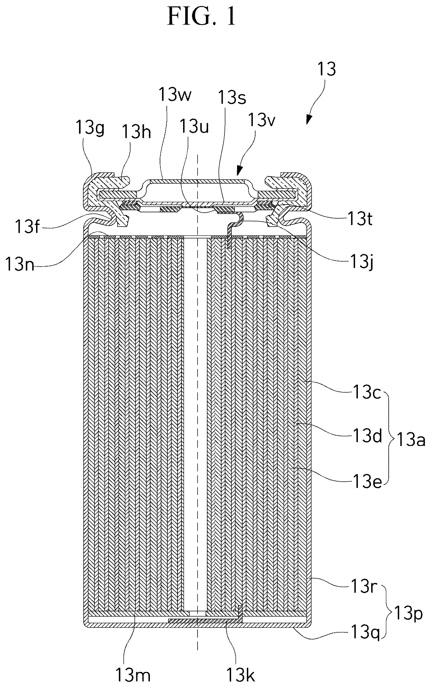

FIG. 1 is a cross-sectional view of a cylindrical secondary battery 13 according to one embodiment of the present disclosure.

As illustrated, the cylindrical secondary battery 13 according to the present embodiment includes a battery can 13p, an electrode assembly 13a, and a cap assembly 13v.

The battery can 13p provides a space capable of accommodating the electrode assembly 13a and has an open top shape. In particular, a gas guide part may be formed on an inner surface of the battery can 13p. The gas guide part guides gas generated in the battery can toward a gas vent part of the cap assembly 13v. The gas guide part may be a groove. The gas guide part may provide a passage between the electrode assembly 13a and the battery can 13p when the electrode assembly expands. The detailed description of the cylindrical secondary battery 13 is as follows.

As illustrated, the cylindrical secondary battery 13 includes the electrode assembly 13a, the battery can 13p for accommodating the electrode assembly 13a and an electrolyte therein, the cap assembly 13v coupled to an opening of the battery can 13p to seal the battery can 13p, and an insulating plate 13n located between the electrode assembly 13a and the cap assembly 13v inside the battery can 13p.

The electrode assembly 13a may include a separator 13d and a first electrode 13c and a second electrode 13e located with the separator 13d interposed therebetween, and may be wound in a spiraling jelly-roll shape, such that the first electrode 13c, the separator 13d, and the second electrode 13e create larger spirals in progressing from the center of the battery can 13p to an exterior of the battery can 13p.

The first electrode 13c includes a first substrate and a first active material layer located on the first substrate. A first electrode tab 13j may extend outward from a first uncoated portion of the first substrate where the first active material layer is not located, and the first electrode tab 13j may be electrically connected to the cap assembly 13v.

The second electrode 13e includes a second substrate and a second active material layer located on the second substrate. A second electrode tab 13k may extend outward from a second uncoated portion of a second substrate where the second active material layer is not located, and the second electrode tab 13k may be electrically connected to the battery can 13p. The first electrode tab 13j and the second electrode tab 13k may extend in opposite directions, such that the first electrode tab 13j extends towards the cap assembly 13v and the second electrode tab 13k extends towards a bottom portion 13q.

The first electrode 13c may serve as a positive electrode. In this case, the first substrate may be formed of, for example, an aluminum foil, and the first active material layer may include, for example, a transition metal oxide. The second electrode 13e may serve as a negative electrode. In this case, the second substrate may be formed of, for example, a copper foil or a nickel foil, and the second active material layer may include, for example, graphite.

The separator 13d serves to prevent a short circuit between the first electrode 13c and the second electrode 13e while allowing movement of ions (e.g., lithium ions) therebetween. The separator 13d may be formed of, for example, a polyethylene film, a polypropylene film, a polyethylene-polypropylene film, etc.

The battery can 13p is configured to accommodate the electrode assembly 13a and an electrolyte and forms an exterior of the battery along with the cap assembly 13v. The battery can 13p has a bottom portion 13q, which has a disc shape and a predetermined diameter, and a cylindrical body portion 13r formed integrally with the bottom portion 13q. The body portion 13r has a substantially cylindrical shape. A beading part 13f deformed inward may be located on the body portion 13r, and a crimping part 13g bent inward may be located at an open end of the body portion 13r.

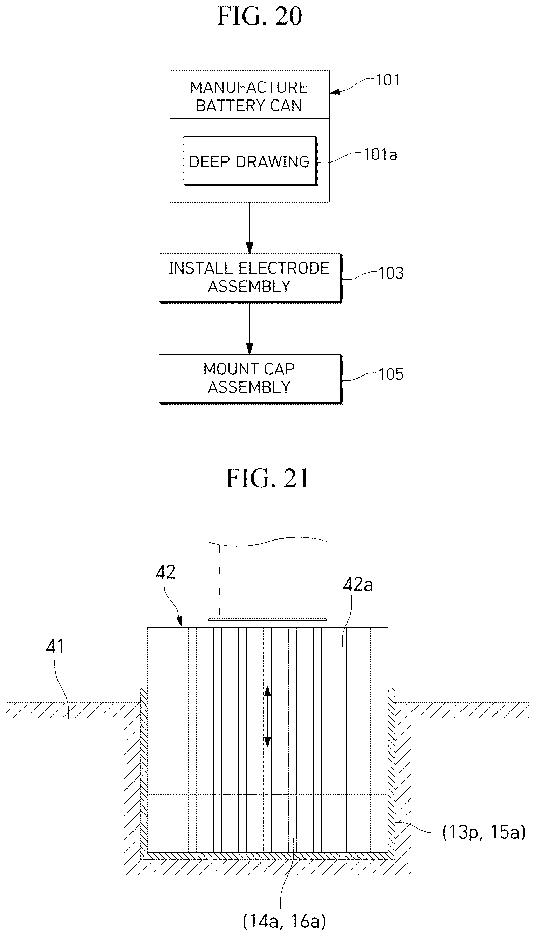

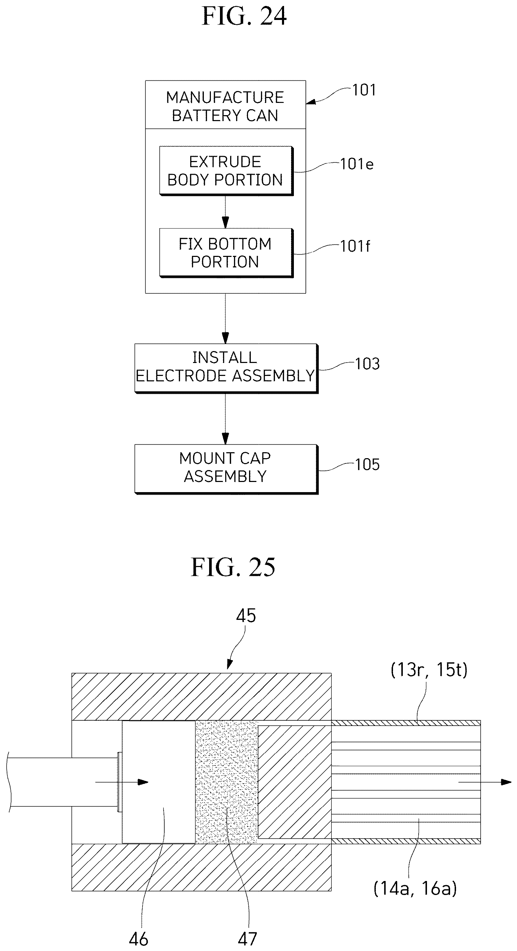

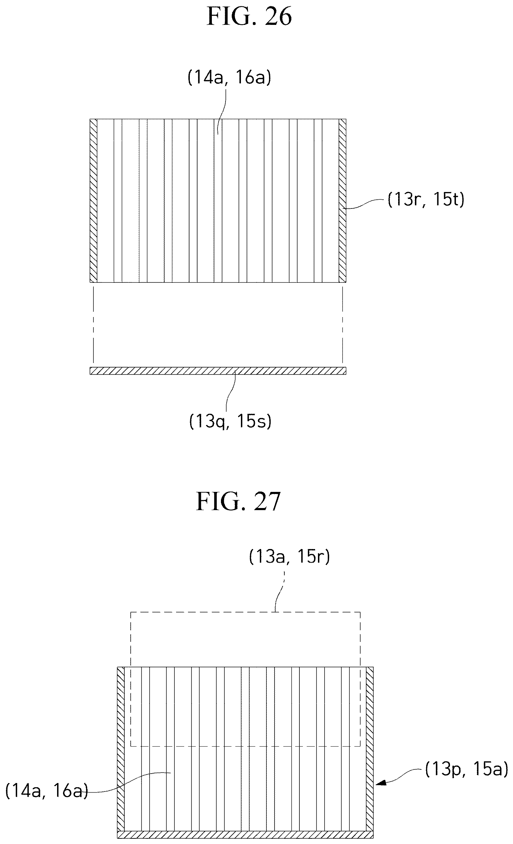

The battery can 13p may be manufactured by a deep-drawing method and/or an extrusion and welding method. The battery can 13p may be formed of, for example, steel plated with nickel. The deep-drawing method is a method of pressing a metal plate having a predetermined thickness using an upper mold 42 (see FIG. 21) and plastic-deforming the metal plate. In addition, as illustrated in FIGS. 25 and 26, the extrusion and welding method is a manufacturing method of extruding a material 47 which can be used to manufacture the body portion 13r and then welding the bottom portion 13q to a lower end of the body portion. The description thereof will be given below.

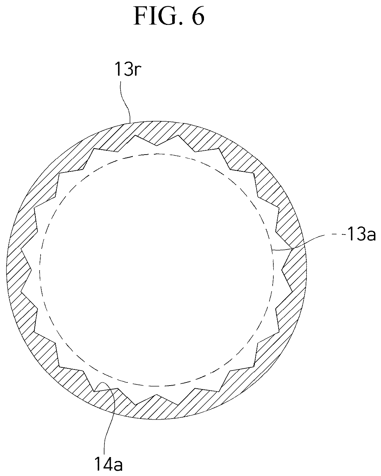

As illustrated in FIGS. 6 to 11, degassing grooves of various shapes are formed in an inner circumferential surface of the body portion 13r. Each degassing groove is a gas passage that guides gas toward a gas vent part 13s when an event occurs in the electrode assembly 13a.

In the case of conventional battery cans, for various reasons, when the electrode assembly expands, the expanding electrode assembly presses into the inner surface of the battery can (specifically the inner circumferential surface of the body portion), and thus the gas generated inside the battery can cannot move toward the gas vent part, or the gas vent part becomes blocked by the expanding electrode assembly. When the gas is not discharged quickly, an internal pressure of the battery can may increase, thereby leading to an explosion.

In the examples illustrated in FIGS. 6 to11, the battery can has various degassing grooves 14a for discharging gas on the inner surface of the battery can. The degassing groove 14a is a gas guide part for guiding the gas generated inside the battery can toward the gas vent part 13s.

That is, the degassing groove 14a is a passage that guides the gas generated inside the battery can 13p toward an upper space of the electrode assembly 13a, that is, the gas vent part 13s. Since the degassing groove 14a is formed in this way, even when gas is discharged from a lower portion of the electrode assembly 13a, the gas may move upward without being trapped and may be discharged through the gas vent part 13s. The description related to the degassing groove 14a will be given below.

The shape of the degassing groove 14a may vary as needed. In some configurations, the degassing groove 14a may be multiple (i.e., a plurality) of grooves formed in parallel to each other (i.e., the gas passageways extending toward the gas vent part 13s each extend vertically within the battery can 13p and in parallel with one another). In addition, the degassing groove 14a may extend from the lower end of the body portion 13r toward the cap assembly 13v. In addition, the degassing grooves 14a may be spaced a predetermined distance from each other in a circumferential direction of the body portion 13r.

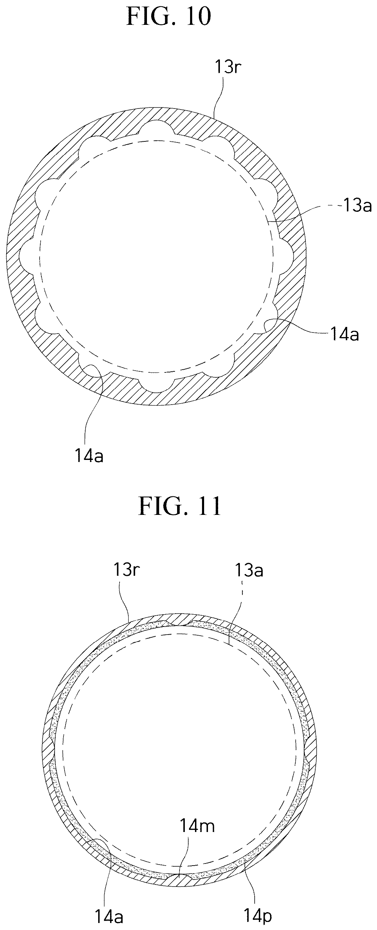

In addition, as illustrated in FIG. 11, a ventilation liner 14p may be mounted inside the degassing groove 14a. The ventilation liner 14p is a heat-resistant member having pores through which gas may pass and may maintain a predetermined shape while allowing the gas to pass. That is, the ventilation liner 14p may maintain an initial state without being elastically deformed by an external force.

The ventilation liner 14p may come into surface contact with the electrode assembly 13a when the electrode assembly 13a expands. The expanding electrode assembly 13a is supported by the ventilation liner 14p. By applying the ventilation liner 14p, the electrode assembly 13a cannot enter the degassing groove 14a, thereby preventing the electrode assembly 13a from being locally deformed.

The beading part 13f can suppress the electrode assembly 13a from moving inside the battery can 13p and facilitate seating of a gasket 13h and the cap assembly 13v. The crimping part 13g may tightly fix the cap assembly 13v in place by pressing an edge of the cap assembly 13v through the gasket 13h.

The cap assembly 13v may be fixed to the inside of the crimping part 13g through the gasket 13h to seal the battery can 13p. The cap assembly 13v may include an upper cap 13w, the gas vent part 13s, a lower cap 13t, "an insulating member, and a sub-plate 13u, but is not limited to these examples and may be modified in any of various ways.

The upper cap 13w may be located at an uppermost side of the cap assembly 13v. The upper cap 13w may include a terminal part that protrudes convexly upward and is connected to an external circuit, and an outlet for discharging gas may be located around the terminal part.

The gas vent part 13s may be located under the upper cap 13w. The gas vent part 13s may include a protrusion that protrudes convexly downward and is connected to the sub-plate 13u, and at least one notch located around the protrusion.

When gas is generated due to overcharging, malfunction, or the like of the battery, the protrusion may be deformed upward by pressure and separate from the sub-plate 13u, while the gas vent part 13s is cut along the notch. The cut gas vent part 13s can discharge gas to the outside, thereby preventing the explosion of the battery.

The lower cap 13t may be located under the gas vent part 13s. The lower cap 13t may have a first opening for exposing the protrusion of the gas vent part 13s and a second opening for gas discharge. The insulating member may be located between the gas vent part 13s and the lower cap 13t to insulate the gas vent part 13s from the lower cap 13t.

The sub-plate 13u may be located under the lower cap 13t. The sub-plate 13u may be fixed to a lower surface of the lower cap 13t to block the first opening of the lower cap 13t, and the protrusion of the gas vent part 13s may be fixed to the sub-plate 13u. The first electrode tab 13j drawn out of the electrode assembly 13a may be fixed to the sub-plate 13u. Accordingly, the upper cap 13w, the gas vent part 13s, the lower cap 13t, and the sub-plate 13u may be electrically connected to the first electrode 13c of the electrode assembly 13a.

The insulating plate 13n may be in contact with the electrode assembly 13a under the beading part 13f, and the insulating plate 13n may have a tab opening through which the first electrode tab 13j is drawn out. The cap assembly 13v can be electrically connected to the first electrode 13c by the first electrode tab 13j. The cap assembly 13v may face the electrode assembly 13a with the insulating plate 13n interposed therebetween, the insulated plate 13n insulating the cap assembly 13v from the electrode assembly. Meanwhile, another insulating plate 13m for insulation between the electrode assembly 13a and the bottom portion 13q of the battery can 13p may be included.

A description is given of materials that may be used in the electrode plate of the above electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% (weight percentage) to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al), but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as a material capable of being doped and undoped with lithium. The Si-based negative electrode active material may be silicon, a silicon-carbon composite, SiOₓ (0<x≤2), a Si-based alloy, or a combination thereof.

A silicon-carbon composite may be a composite of silicon and amorphous carbon. According to one embodiment, a silicon-carbon composite may be in the form of a silicon particle and amorphous carbon coated on the surface of the silicon particle.

A silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but is not limited thereto. The organic material and the inorganic material may be mixed in one coating layer or may be in the form of a coating layer including (or containing) an organic material and a coating layer including (or containing) an inorganic material which are stacked on each other.

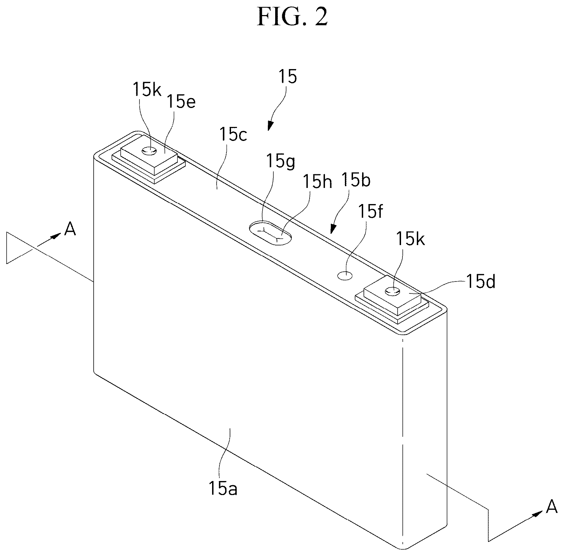

FIG. 2 is a perspective view of a prismatic (i.e., having a three-dimensional shape in the shape of a geometric prism) secondary battery 15 according to one embodiment of the present disclosure.

A battery can 15a forms the overall appearance of a prismatic battery and may be formed of a conductive metal such as aluminum, aluminum alloy, or nickel-plated steel. In addition, the battery can 15a may provide a space for accommodating an electrode assembly therein.

A cap assembly 15b may include a cap plate 15c that covers the opening of the battery can 15a. In some examples, the battery can 15a and the cap plate 15c may be made of a conductive material. Here, a positive electrode terminal 15d and a negative electrode terminal 15e may be electrically connected to respective positive and negative electrodes inside the battery can 15a and may be installed to protrude outward through the cap plate 15c.

The cap plate 15c may have an electrolyte inlet 15f, a gas discharge hole, and a gas vent part 15h connected to the gas discharge hole 15g. The gas vent part 15h is opened by gas generated inside the battery and performs a degassing function.

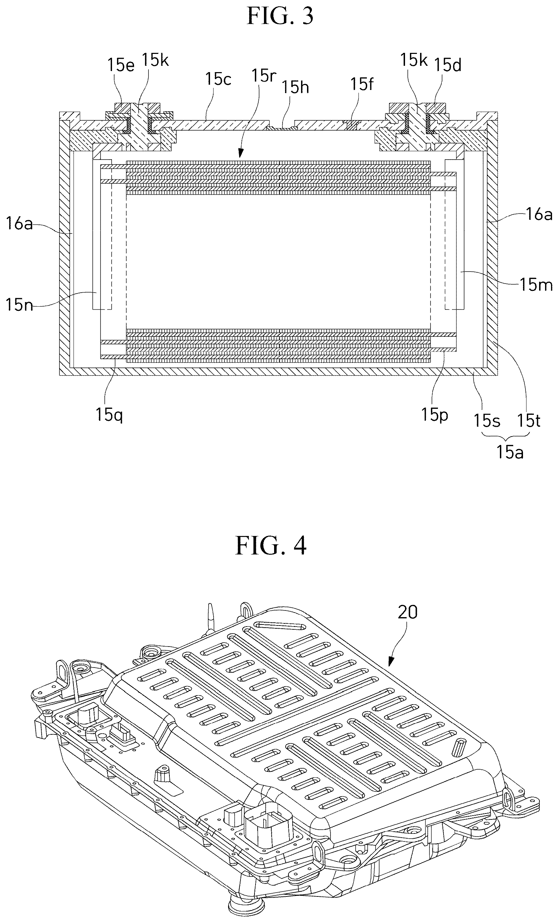

FIG. 3 is a cross-sectional view along line A-A in FIG. 2.

The electrode assembly 15r may be formed by winding or stacking a first electrode plate, a separator, and a second electrode plate formed in a plate shape or film shape. The shape of the electrode assembly 15r is not limited in the present disclosure. When the electrode assembly 15r is a wound stack, a winding axis may be parallel to the longitudinal direction of the battery can 15a. In other embodiments, the electrode assembly 15r may be a stack type rather than a winding type.

In still other embodiments, the electrode assembly 15r may be a Z-stack electrode assembly in which a positive electrode plate and a negative electrode plate are inserted into both sides of a separator, which can then bent into a Z-stack. In addition, one or more electrode assemblies 15r may be stacked such that long sides of the electrode assemblies are adjacent to each other and accommodated in the battery can 15a, and the number of electrode assemblies in the battery can 15a is not limited in the present disclosure. The first electrode plate of the electrode assembly 15r may act as a negative electrode, and the second electrode plate may act as a positive electrode, or vice versa.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In FIG. 3, the first electrode tab 15p and the second electrode tab 15q are illustrated as being positioned on the right side and the left side of the electrode assembly 15r, respectively; however, in some other embodiments, the first electrode tab 15p and the second electrode tab 15q may both be positioned on the right side or the left side of the electrode assembly 15r.

Here, a left side surface of the electrode assembly 15r refers to a surface to which the second current collector 15n is bonded among vertical surfaces of the electrode assembly 15r, and a right side surface thereof refers to an opposite surface to which the first current collector 15m is bonded. Accordingly, the names of the left and right side surfaces of the electrode assembly 15r may be changed when the battery rotates in a left-right direction or a vertical direction.

A separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 15r is accommodated in the battery can 15a along with an electrolyte.

In the secondary battery 15, the first current collector 15m and the second current collector 15n may be welded and connected to the first electrode tab 15p extending from the first electrode plate and the second electrode tab 15q extending from the second electrode plate, respectively.

The first current collector 15m and the second current collector 15n are connected to the positive electrode terminal 15d and the negative electrode terminal 15e through connection members 15k, respectively. In some embodiments, the connection members 15k may each have an outer peripheral surface that is threaded and may be respectfully fastened or otherwise coupled to the positive electrode terminal 15d and the negative electrode terminal 15e by screwing. However, the present disclosure is not limited thereto. For example, the connection members 15k may also be coupled to the positive electrode terminal 15d and the negative electrode terminal 15e by riveting or welding.

The battery can 15a may open upward and accommodate the electrode assembly 15r therein. The battery can 15a illustrated has the bottom portion 15s of a rectangular plate shape and the prismatic body portion 15t formed integrally with the bottom portion. Other shapes of the bottom portion 15s and the prismatic body portion 15t are likewise within the scope of this disclosure.

A degassing groove 16a may be formed in the inner surface of the body portion 15t. The degassing groove 16a is a gas guide part that guides gas toward the gas vent part 15h when gas is generated inside the battery can 15a.

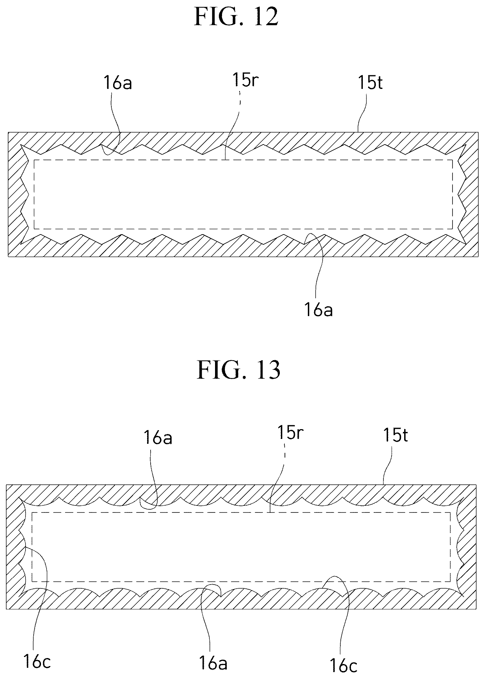

The degassing groove 16a may have various shapes as illustrated in FIGS. 12 to 17.

For example, the degassing groove 16a may have a shape in which a plurality of grooves are parallel to each other. In addition, (as illustrated in FIG. 3) the degassing groove 16a may extend from the lower end to an upper end of the body portion 15t to reach the cap assembly 15b.

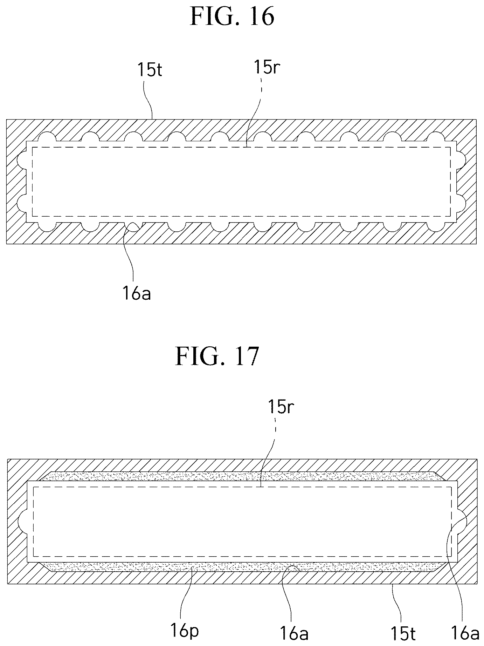

In addition, as illustrated in FIG. 17, a ventilation liner 16p may be mounted inside the degassing groove 16a. The ventilation liner 16p may be a heat-resistant member having pores through which gas may pass. The ventilation liner 16p may have physical properties such that the ventilation liner 16p is not deformed by an external force, such as an expanding electrode assembly 15r. In addition, the ventilation liner 16p constrains the shape/form of the electrode assembly 15r, the electrode assembly 15r cannot enter the degassing groove 16a, thereby preventing the electrode assembly 15r from being locally deformed.

As stated above, the battery can 15a may be manufactured by a deep-drawing method and/or by an extrusion and welding method. The deep-drawing method is a method of pressing a metal plate having a predetermined thickness using an upper mold 42 (see FIG. 21) and plastic-deforming the metal plate. In addition, as illustrated in FIGS. 25 and 26, the extrusion and welding method is a manufacturing method of extruding material 47 (see FIG. 25) to manufacture the body portion 15t and welding the bottom portion 15s to the lower end of the body portion. The description thereof will be given below.

FIG. 4 is a perspective view of a secondary battery pack 20 to which the secondary battery according to one embodiment of the present disclosure is applied.

The secondary battery pack may be manufactured by embedding a plurality of secondary battery modules in a pack housing designed to be mounted on an actual product. The pack housing may include fasteners and electrical leads that are required for product mounting. In FIG. 4, for convenience of illustration, components including a bus bar, a cooling unit, external terminals for electrically connecting batteries, etc., are not illustrated. The secondary battery pack may be mounted on a vehicle. The vehicle may be, for example, an electric vehicle, a hybrid vehicle, or a plug-in hybrid vehicle. The vehicle may be a four-wheeled vehicle or a two-wheeled vehicle but is not limited thereto.

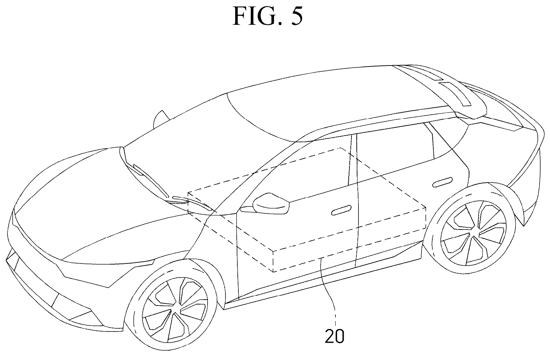

FIG. 5 is a view for describing a vehicle including a secondary battery pack illustrated in FIG. 4. FIG. 5 illustrates the secondary battery pack 20 according to one embodiment of the present disclosure, which is mounted under a vehicle body of a vehicle. The vehicle is operated by receiving power from the secondary battery pack 20 according to one embodiment of the present disclosure.

FIGS. 6 to 11 are cross-sectional views of the body portion 13r of the battery can 13p illustrating various examples of degassing grooves 14a applied to the cylindrical secondary battery.

As illustrated in FIG. 6, the triangular sawtooth-shaped degassing groove 14a may be formed in the inner surface of the body portion 13r of the battery can 13p. In the present description, the inner surface refers to a surface facing the electrode assembly 13a. The degassing groove 14a may maintain a space even when the electrode assembly 13a expands and touches the inner circumferential surface of the body portion 13r and may guide the gas generated inside the battery can 13p upward to the gas vent part 13s.

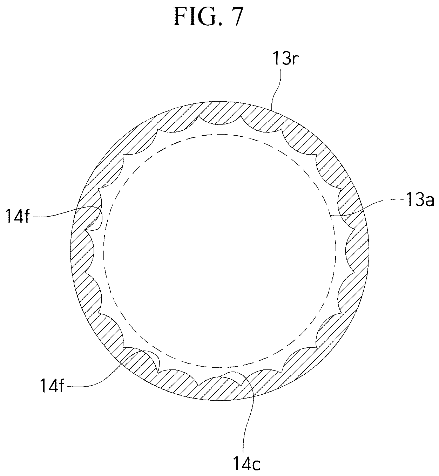

A number of arc-shaped protrusions 14c are formed on the inner circumferential surface of the body portion 13r of FIG. 7. In addition, the degassing groove 14a is provided between the arc-shaped protrusions 14c. The degassing grooves 14a extend vertically within the battery can 13p, are parallel to each other, and guide the gas inside the battery can 13p upward.

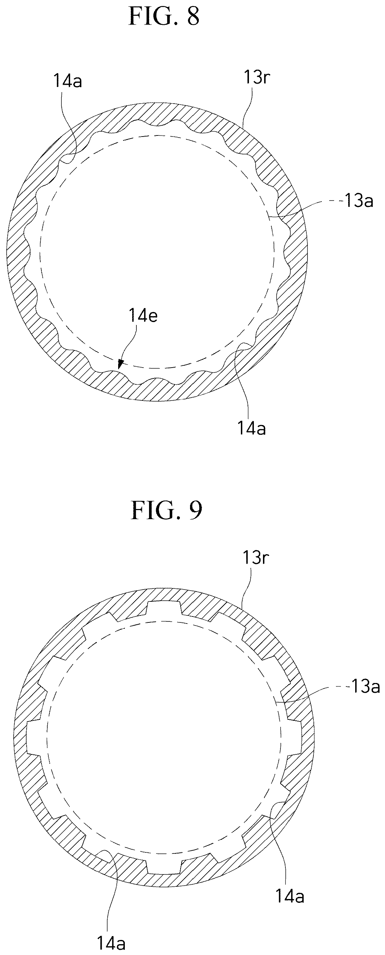

As illustrated in FIG. 8, a wave-shaped unevenness 14e may be applied to the inner circumferential surface of the body portion 13r. The wave-shaped unevenness 14e may have a protrusion and a groove, and the groove may serve as the degassing groove 14a. In addition, as illustrated in FIGS. 9 and 10, the degassing groove 14a may have a quadrangular sawtooth shape or a semicircular shape.

The degassing groove 14a illustrated in FIG. 11 may be partitioned by four protrusions 14m and may accommodate the ventilation liner 14p. The ventilation liner 14p may be a sheet-shaped member having a porous structure through which gas may pass. The ventilation liner 14p may come into close contact with an outer surface of the electrode assembly 13a to support the electrode assembly 13a when the electrode assembly 13a expands. The gas generated in the battery can 13p may pass through the internal pores of the ventilation liner 14p and move toward the gas vent part 13s.

FIGS. 12 to 17 are cross-sectional views illustrating various degassing grooves 16a applied to the prismatic secondary battery according to one embodiment of the present disclosure.

As illustrated in FIG. 12, the triangular sawtooth-shaped degassing groove 16a may be formed in the inner surface of the body portion 15t of the battery can of the prismatic secondary battery. The degassing groove 16a may maintain a space even when the electrode assembly 15r expands and touches the inner circumferential surface of the body portion 15t and may guide the gas generated therein upward to the gas vent part 15h.

A number of arc-shaped protrusions 16c are formed on the inner surface of the body portion 15t of FIG. 13, and the degassing groove 16a is provided between the arc-shaped protrusions 16c. The degassing grooves 16a can be parallel to each other and guide the gas inside the battery can 15a upward.

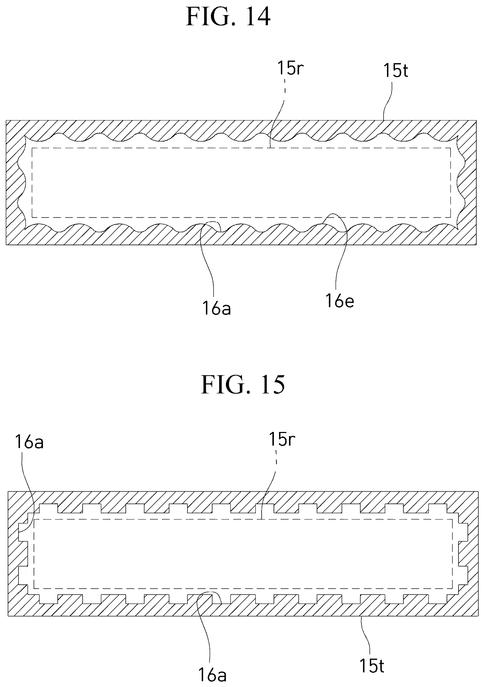

In addition, as illustrated in FIG. 14, a wave-shaped unevenness 16e may be applied to the inner circumferential surface of the body portion 15t. The wave-shaped unevenness 16e may have a protrusion and a groove, and the groove may serve as the degassing groove 16a.

The body portion 15t illustrated in FIG. 15 has the quadrangular sawtooth-shaped degassing groove 16a. The quadrangular sawtooth-shaped degassing grooves 16a may be spaced a predetermined distance from each other and may guide the generated gas toward the gas vent part 15h.

The degassing groove 16a applied to the body portion 15t of FIG. 16 has a semicircular shape. The semicircular degassing grooves 16a are also spaced a predetermined distance from each other and may guide the gas generated inside the battery can 15a toward the gas vent part 15h.

In addition, the degassing groove 16a of FIG. 17 is provided in the ventilation liner 16p. The ventilation liner 16p may be a sheet-shaped member having a porous structure through which gas may pass. The ventilation liner 16p may come into close contact with the electrode assembly 15r to support and/or constrain the electrode assembly 15r when the electrode assembly 15r expands. The gas generated in the battery can 15a may pass through the internal pores of the ventilation liner 16p and move toward the gas vent part 15h.

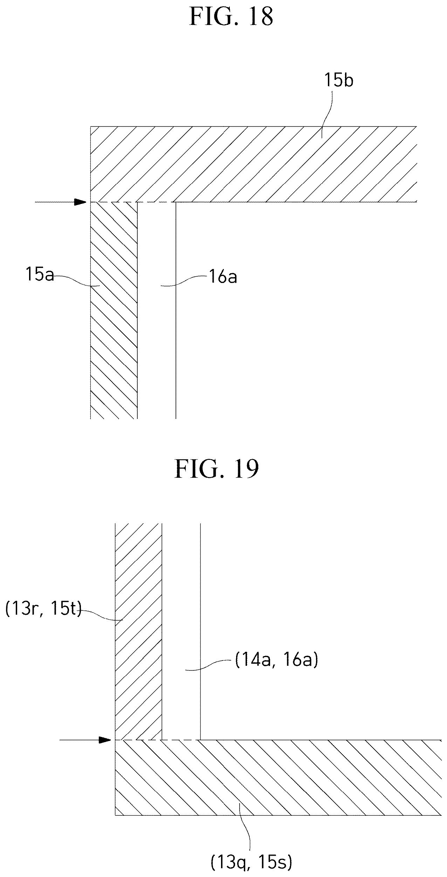

FIG. 18 is a partial cross-sectional view for describing a method of bonding a cap assembly to a battery can in the prismatic secondary battery according to one embodiment of the present disclosure.

In the secondary battery of the present embodiment, the cap assembly 15b may be welded to the body portion 15t of the battery can by side welding. That is, in a state in which the cap assembly 15b is disposed on the battery can 15a, welding heat is applied from the outside of the battery can in a direction of the arrow. The reason for performing side welding in this way is to prevent the internal degassing groove from being narrowed by a welding bead.

FIG. 19 is a partial cross-sectional view for describing a method of bonding a bottom portion to a body portion of a battery can in the secondary battery according to one embodiment of the present disclosure.

As described above, the battery cans 13p and 15a may be manufactured by separately manufacturing the body and bottom portions thereof, then welding the bottom portions to the body portions. Side welding may also be performed when fixing the bottom portions 13q and 15s to the body portions 13r and 15t. That is, welding heat is applied to a portion in which the body portion comes into contact with the bottom portion in the direction of the arrow. Through the side welding, it is possible to prevent the welding bead from narrowing the degassing grooves 14a and 16a.

FIG. 20 is a flowchart illustrating a method of manufacturing a secondary battery according to one embodiment of the present disclosure, and FIGS. 21 to 23 are views sequentially illustrating the method of manufacturing a secondary battery illustrated in FIG. 20.

As illustrated in FIG. 20, the method of manufacturing a secondary battery may include a battery can manufacturing operation 101, an electrode assembly installing operation 103, and a cap assembly mounting operation 105.

The battery can manufacturing operation 101 may be a process of manufacturing the battery cans 13p, 15a that provide the space capable of accommodating the electrode assembly 15r and have at least one degassing grooves 14a,16a in the inner surfaces thereof. The at least one degassing groove 14a,16a has a shape in which a plurality of grooves are parallel to each other. The battery can manufacturing operation 101 may include a deep drawing process 101a.

The deep drawing process 101a is a process of moving the upper mold 42 downward in a state in which a prepared material(e.g., a metal plate having a predetermined thickness) is located on a lower mold 41 to form the battery can. During the deep drawing process 101a, the degassing grooves 14a, 16a may also be formed at the same time as the forming of the battery can. To this end, a groove forming protrusion 42a may be formed on the upper mold 42. The groove forming protrusion 42a is a protrusion for forming the degassing grooves 14a, 16a. Since the deep drawing process is a general process, the description thereof will be omitted.

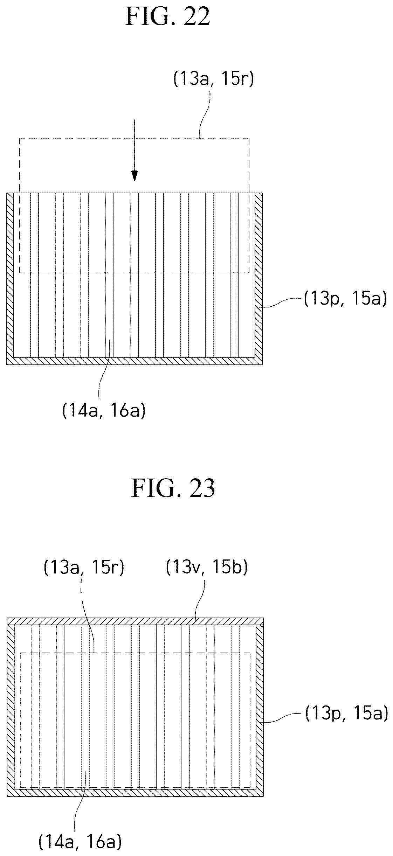

The subsequent electrode assembly installing operation 103 is a process of installing the electrode assemblies 13a, 15r into the manufactured battery cans 13p, 15a as illustrated in FIG. 22. In addition, the cap assembly mounting operation 105 is a process of coupling the cap assemblies 13v, 15b to the upper end of the battery can.

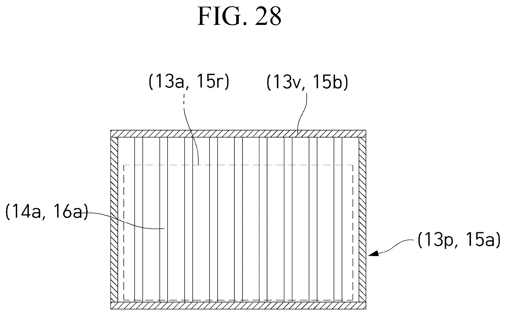

FIG. 24 is a flowchart illustrating another configuration of the method of manufacturing a secondary battery according to one embodiment of the present disclosure, and FIGS. 25 to 28 are schematic views illustrating the method of manufacturing the secondary battery illustrated in FIG. 24.

The method of manufacturing a secondary battery illustrated in FIG. 24 may include (as an alternative and/or addition to the method illustrated in FIG. 21) a body portion extruding process 101e and a bottom portion fixing process 101f in the battery can manufacturing operation 101.

As illustrated in FIG. 25, the body portion extruding process 101e is a process of extruding a material 47 supplied to an extrusion mold 45 using a piston 46 to form the body portions 13r, 15t. Both ends of the body portions 13r, 15t may be open. The degassing grooves 14a, 16a may be simultaneously molded in the inner surfaces of the extruded body portions 13r, 15t.

In addition, the bottom portion fixing process 101f may be a process of welding separately manufactured bottom portion 13q, 15s while in close contact with the lower ends of the body portion 13r, 15t. The bottom portion 13q, 15s is a metal plate having the same material as the body portion. The welding of the bottom portion may be a side welding method described through FIG. 19. The battery can 13p, 15a may be formed through the bottom portion fixing process 101f. After the battery can is formed, the electrode assembly installing operation 103 and the cap assembly mounting operation 105 are performed.

According to a secondary battery of the present disclosure, because a degassing space is formed inside a battery can for accommodating an electrode assembly, lowering of pressure and discharging of gas inside the can are easy even when the electrode assembly expands due to an event, such as a fire or the like, thereby preventing the expansion of an accident.

Although the present disclosure has been described above with respect to embodiments thereof, the present disclosure is not limited thereto. Various modifications and variations can be made thereto by those skilled in the art within the spirit of the present disclosure.

## Claims

1. A secondary battery (13, 15) comprising:
a battery can (13p, 15a) that provides a space configured to accommodate an electrode assembly (13a, 15r);
the electrode assembly (13a, 15r) accommodated in the battery can (13p, 15a); and
a cap assembly (13v, 15b) mounted on the battery can (13p, 15a) and in contact with the electrode assembly (13a, 15r), the cap assembly (13v, 15b) having a gas vent part (13s, 15h),
wherein a gas guide part is located on an inner surface of the battery can (13p, 15a) and configured to guide gas generated in the battery (13, 15) toward the gas vent part (13s, 15h).

2. The secondary battery (13, 15) as claimed in claim 1, wherein:
the gas guide part comprises a degassing groove (14a, 16a) that is formed in the inner surface of the battery can (13p, 15a); and
the gas guide part provides a passage between the electrode assembly (13a, 15r) and the battery can (13p, 15a) when the electrode assembly (13a, 15r) expands.

3. The secondary battery (13) as claimed in claim 1 or 2, wherein the battery can (13p) is a cylindrical battery can (13p) comprising:
a bottom portion (13q), which has a disc shape and a predetermined diameter; and
a cylindrical body portion (13r) formed integrally with the bottom portion.

4. The secondary battery (13) as claimed in claim 2 or 3, wherein the degassing groove (14a) has a shape in which a plurality of grooves are parallel to each other.

5. The secondary battery (13) as claimed in any one of the claims 2 to 4, wherein:
the battery can (13p) is manufactured using a deep drawing process; and
the degassing groove (14a) is also formed during the deep drawing process.

6. The secondary battery (13) as claimed in any one of the claims 3 to 5, wherein the bottom portion (13q), and the body portion (13r) are separately manufactured and then fixed together by welding.

7. The secondary battery (15) as claimed in claim 1 or 2, wherein the battery can (15a) is a prismatic battery can (15a) comprising:
a bottom portion (15s) of a rectangular plate shape; and
a prismatic body portion (15t) formed integrally with the bottom portion (15s).

8. The secondary battery (15) as claimed in claim 7, wherein the degassing groove (16a) has a shape in which a plurality of grooves are parallel to each other.

9. The secondary battery (15) as claimed in claim 7 or 8, wherein the degassing groove (16a) extends from the bottom portion (15s) toward the cap assembly (15b).

10. The secondary battery (15) as claimed in any one of the claims 7 to 9, wherein a ventilation liner (16p) through which gas can pass is mounted inside the degassing groove (16a).

11. The secondary battery (15) as claimed in any one of the claims 7 to 10, wherein:
the battery can (15a) is manufactured using a deep drawing process; and
the degassing groove (16a) is formed during the deep drawing process.

12. The secondary battery (13, 15) as claimed in any one of the claims 7 to 11, wherein the bottom portion (15s) and the body portion (15t) are separately manufactured and then fixed together by welding.

13. A method of manufacturing a secondary battery (13, 15), comprising:
forming a battery can (13p, 15a) that comprises:
a space that accommodates an electrode assembly (13a, 15r); and
an inner surface having at least one gas degassing groove (14a, 16a);
installing an electrode assembly (13a, 15r) in the battery can (13p, 15a); and
mounting a cap assembly (13v, 15b) on the battery can (13p, 15a).

14. The method as claimed in claim 13, wherein the at least one degassing groove (14a, 16a) has a shape in which a plurality of grooves are parallel to each other, and
the method further comprises simultaneously:
performing a deep drawing process on a prepared material to form the battery can (13p, 15a); and
forming the at least one degassing groove (13p, 15a).

15. The method as claimed in claim 13, wherein the at least one degassing groove (14a, 16a) has a shape in which a plurality of grooves are parallel to each other,
the battery can (13p, 15a) comprises:
a body portion (13r, 15t) of which an inner surface has the at least one degassing groove (14a, 16a) and both ends are open; and
a bottom portion (13q, 15s) fixed to one end of the body portion (13r, 15t), and
the forming of the battery can (13p, 15a) further comprises:
extruding and molding a body portion (13r, 15t); and
fixing a bottom portion (13q, 15s) to the body portion (13r, 15t).
